# EUROPÄISCHE PATENTSCHRIFT

(11) **EP 2 338 635 B1**
(45) Veröffentlichungstag und Bekanntmachung des Hinweises auf die Patenterteilung: **18.07.2012**
(21) Anmeldenummer: 09401051.9
(22) Anmeldetag: 22.12.2009
(51) Int. Cl.: B23K 26/42

(54) **Vorrichtung und Verfahren zum Laserschutz durch Schwingungsmessung**
Equipment and method for laser protection by vibration measurement
Dispositif et procédé de protection laser par mesure d'oscillation

(43) Veröffentlichungstag der Anmeldung: 29.06.2011
(73) Patentinhaber: Antares GmbH, 09232 Hartmannsdorf (DE)
(72) Erfinder: Bergelt, Jörg, 09116 Chemnitz (DE)
(74) Vertreter: Steiniger, Carmen

(56) Entgegenhaltungen:
- EP-A1- 1 930 114
- EP-A1- 2 008 755
- CH-A5- 667 835
- DE-B3-102007 029 787
- DE-B3-102007 038 780
- DE-U1- 9 101 608
- GB-A- 1 595 201
- JP-A- 9 136 673
- US-A- 4 601 533

## Beschreibung

Die Erfindung betrifft ein Laserschutzsystem mit wenigstens einer Vorrichtung zur Detektion wenigstens eines Laserstrahles eines Lasers auf einer Laserschutzwand und ein Laserschutzverfahren, wobei mit wenigstens einer Vorrichtung das Auftreffen wenigstens eines Laserstrahles eines Lasers auf eine Laserschutzwand detektiert wird.

Laser wurden in den letzten Jahren zu immer leistungsfähigeren Systemen entwickelt, die gleichzeitig immer kostengünstiger wurden. In der Folge werden Laserwerkzeuge in zunehmendem Maße als Werkzeuge in der Industrie etabliert. Hierbei ist es absolut unerlässlich, die Sicherheit in der Nähe von Laseranlagen zu gewährleisten und damit Arbeitsunfälle mit Lasern zuverlässig zu vermeiden. Gleichzeitig soll ein zuverlässiger Schutz vor Lasern möglichst kostengünstig realisiert werden.

Im Stand der Technik werden Anlagen, die leistungsfähige Laser enthalten, typischerweise durch Schutzwände umgeben, die einen Austritt des Laserstrahls aus der Anlage verhindern. Es gibt passive Schutzwände, die einen mechanischen Schutz vor der Strahlung bieten und es gibt aktive Schutzwände, die beim Auftreffen von Laserstrahlung auf die Schutzwand ein Signal generieren und damit den Laser abschalten können. Aktive Schutzwände können mit geringerem Materialaufwand als passive Schutzwände gebaut werden, da bei aktiven Schutzwänden eine Belastbarkeit mit Laserstrahlung nur für einen Zeitraum von dem Auftreffen der Laserstrahlung bis zu dem Abschalten des Lasers gewährleistet sein muss. Nachteilig bei aktiven Laserschutzwänden ist, dass diese bisher aufwändig herzustellen sind, dass flexible Gehäuseformen aus nicht standardisierten Gehäuseelementen schwierig zu realisieren sind und dass nach einem Störfall, in welchem eine Laserschutzwand von einem Laserstrahl getroffen wurde, oft aufwändige Reparaturen erforderlich sind.

Die Druckschrift DE 10 2007 038 780 B3 beschreibt eine aktive Laserschutzwand, die aus elektrisch leitfähigen plattenförmigen Elementen besteht, die durch eine Zwischenschicht mit Heißleitereigenschaften voneinander getrennt sind. Beim Auftreffen eines Laserstrahls auf diese Laserschutzwand wird die Zwischenschicht mit Heißleitereigenschaften erwärmt, der Stromfluss über den Heißleiter wird registriert und schaltet den Laser ab. Die Funktion dieser Laserschutzwand basiert auf der Erwärmung der Wand durch den Laserstrahl.

Ein anderer physikalischer Effekt, der in Laserbearbeitungsanlagen auftritt, ist der fotoakustische Effekt. Durch die zeitabhängige Erwärmung und Abkühlung eines Festkörpers, welche mit einer Ausdehnung und Kontraktion desselben verbunden ist, entstehen akustische Wellen, deren Periodizität der der Wärmequelle entspricht. Der fotoakustische Effekt wird auch in der Laserbearbeitungstechnik genutzt. So beschreibt die Druckschrift DE 10 2007 029 787 B3 ein Verfahren zum Ermitteln des Berührungspunktes eines Laserstrahles an einer Kante eines Körpers in einer Laserbearbeitungsmaschine. Bei diesem Verfahren wird der fokussierte Laserstrahl in z-Richtung durch eine Düse geführt. Die Position des Laserstrahls in der Düse kann in x- und y-Richtung verstellt werden, bis der Laser die Düsenränder berührt. Der gepulste Laser erzeugt dann am Düsenrand ein akustisches Signal, das mit einem Mikrofon empfangen wird. Durch Auswertung der x- und y-Verstellwege kann die Geometrie des Laserstrahles in der Düse bestimmt werden. Alternativ zu dem beschriebenen Verfahren kann auch direkt im Strahlweg ein plattenförmiger Körper angeordnet sein, der mit einem Piezo-Sensor zur Schallaufnahme ausgestattet ist. In dieser Anordnung wird der ungestörte Laserdurchtritt durch die Düse bzw. ein gedämpfter Laserdurchtritt bei einer Abschirmung eines Teils des Laserstrahls durch den Düsenrand in dem aus dem akustischen Signal gebildeten Sensorsignal abgebildet.

Die Druckschrift EP 1 930 114 A1 beinhaltet eine Laserschutzvorrichtung mit einer Sicherheitsabschaltung. Die beschriebene Laserschutzvorrichtung besteht aus einer Laserschutzwand für einen passiven Laserschutz und einer Laserschutzfolie mit einem mit dem Laser verbundenen Detektor für einen aktiven Laserschutz. Gemäß einer Ausführungsvariante ist die Laserschutzfolie als eine Doppelfolie mit Gas gefüllten Hohlraumkammern ausgebildet. Bei einer Zerstörung der unter Druck stehenden Hohlkammern entsteht ein Schallsignal, welches gemessen und als Signal zur Abschaltung des Lasers genutzt wird. In einer weiteren Variante ist die Laserschutzfolie eine Blasenfolie, die aus einer Vielzahl kleiner Hohlkammern besteht. Auch hier kommt es bei einem Auftreffen eines Laserstrahles auf die Hohlkammern zumindest zu einer Teilzerstörung der Laserschutzfolie, durch welche akustische Signale erzeugt werden, die nachfolgend detektiert werden können. Die Detektion der akustischen Signale erfolgt dabei mittels einem oder mehreren geeignet angeordneten Mikrofonen, die so verteilt sind, dass in allen Fällen mindestens ein Mikrofon hinreichend schnell nach dem Auftreffen eines Laserpulses auf die Laserschutzfolie durch Luft- oder Körperschall erreicht wird.

Die Aufgabe der vorliegenden Erfindung ist es, ein Laserschutzsystem und ein Laserschutzverfahren mit aktivem Laserschutz bereitzustellen, wobei das Laserschutzsystem preisgünstig herstellbar ist, kostengünstig repariert werden kann, flexibel in der Formgestaltung ist und ein besonders hoher Laserschutz zur Verfügung gestellt werden kann.

Diese Aufgabe wird durch ein Laserschutzsystem gemäß Anspruch 1.

Dieses Laserschutzsystem stellt eine sehr kostengünstige Lösung einer aktiven Laserschutzwandsüberwachung dar. Dabei wird durch den erfindungsgemäß vorgesehenen wenigstens einen Körperschallsensor der beim Auftreffen eines Laserstrahls auf der Laserschutzwand erzeugte fotoakustische oder thermoakustische Effekt detektiert. Als Sensoren können hierbei herkömmliche handelsübliche Schwingungsaufnehmer eingesetzt werden, welche mechanisch mit der Laserschutzwand verbunden sind bzw. werden und/oder auf die Laserschutzwand geeignet ausgerichtet sind. Ein einziger Körperschallsensor kann in diesem System große Flächen überwachen, die zudem beliebig gestaltet sein können. Die Flächen werden dabei lückenlos bis an ihren Rand überwacht. Zudem kann der Körperschallsensor an einer beliebigen Stelle der Laserschutzwand angeordnet sein, wodurch das erfindungsgemäße System besonders einfach zu konstruieren ist.

In einer günstigen Weiterbildung des erfindungsgemäßen Laserschutzsystems weist die Signalauswerteeinrichtung für das Signal des Körperschallsensors einen Signalfilter auf, welcher auf das vom Laser erzeugte Signal abgestimmt ist. Eine typische Größe zur Ausbildung des Filters ist die Pulsfrequenz eines gepulsten Lasers. Der Filter kann aber auch zum Durchlass der Modulationsfrequenz eines kontinuierlichen Lasers, zur Bestimmung eines für ein Bauelement charakteristischen Oberwellenanteiles oder zur Erkennung eines einmaligen Impulses ausgebildet sein. Die Signalauswerteinrichtung kann darüber hinaus vorzugsweise eine in dem Signalfilter integrierte oder separate Intensitätsauswerteinrichtung für das Signal des wenigstens einen Körperschallsensors aufweisen, sodass aus der ermittelten Signalintensität auf ein ungewünschtes Auftreffen eines Laserstrahls auf der Laserschutzwand bzw. auf ein Erodieren der Laserschutzwand durch den Laserstrahl geschlossen werden kann.

In einer weiteren Ausführung, die hohen Sicherheitsanforderungen gerecht wird, weist das erfindungsgemäße Laserschutzsystem eine Selbstdiagnoseeinrichtung auf. Diese Einrichtung besteht aus einem Kontrollfrequenzerzeuger, welcher Körperschall mit einer Kontrollfrequenz erzeugt, die sich nicht mit lasertypischen Frequenzen überschneidet. Der Kontrollfrequenzerzeuger ist normal während des Betriebs des Laserschutzsystems eingeschaltet. Im Normfall empfängt der wenigstens eine Körperschallsensor des Laserschutzsystems permanent die Kontrollfrequenz, und die Signalauswerteeinrichtung prüft deren Vorhandensein. Bei Fehlen der Kontrollfrequenz wird auf den Defekt, die Zerstörung oder das Fehlen eines Körperschalldetektors oder des Kontrollfrequenzerzeugers geschlossen, und der Laser wird deaktiviert. Die Signalauswerteeinrichtung kann dabei so ausgebildet sein, dass sie die Informationsausgabe über das defekte Bauelement ermöglicht und so eine schnelle und einfache Reparatur bewerkstelligt werden kann.

In einer vorteilhaften Ausführungsform sind mehrere Konstruktionselemente der Laserschutzwand durch starre, schwingungsübertragende Verbindungselemente gekoppelt und werden von einem Körperschallsensor überwacht. Da sich Körperschall über starre mechanische Verbindungen übertragen lässt, können so mehrere Gehäuseelemente durch einen Körperschallsensor überwacht werden. Die Verbindungselemente können aber auch Reparaturstellen an beschädigten Stellen der Laserschutzwand sein, durch welche die Funktionsfähigkeit des aktiven Schutzsystems wieder hergestellt wird. Die starre Verbindung von Konstruktionselementen zur Übertragung von Körperschall ist zwingend. Konstruktionselemente, zwischen welchen eine elastische Kopplung vorgesehen ist, müssen hingegen mit separaten Körperschallsensoren ausgestattet werden. Konstruktionselemente, die nicht Teil der Schutzwand sind, die aber nicht von dem Laserstrahl getroffen werden sollen, können in das Schutzsystem mit eingebunden und mit separaten Körperschallsensoren ausgestattet werden.

Eine günstige Weiterbildung der Erfindung, insbesondere für stark exponierte Bereiche der Schutzverkleidung, ist die Ausbildung der Laserschutzwand als doppelwandiges Konstruktionselement, das eine Innenwand und eine Außenwand besitzt. Dieses doppelwandige Konstruktionselement ist dabei ganz oder abschnittsweise mit einer Flüssigkeit wie z.B. Wasser oder einem Gel befüllt. Dabei kann durch die Flüssigkeit oder das Gel ein zusätzlicher passiver Laserschutz zur Verfügung gestellt werden.

Viele Flüssigkeiten wie z.B. Wasser sind gute Übertragungsmedien für Schall. Zudem entsteht beim Auftreffen des Laserstrahls auf der Flüssigkeit oder dem Gel eine andere Schallcharakteristik als beim Auftreffen des Laserstrahls auf einem Festkörper wie der Laserschutzwand. Der Körperschallsensor des Laserschutzsystems kann deshalb innerhalb der Flüssigkeit in der doppelwandigen Laserschutzwand angeordnet sein, wo er die speziell geartete Frequenzcharakteristik eines in die Flüssigkeit oder das Gel treffenden Laserstrahls detektieren kann. Das Laserschutzsystem kann aber auch mit mehreren Körperschallsensoren ausgestattet sein, wobei ein oder mehrere Sensoren an der körperlichen Wand und wenigstens ein weiterer Sensor in der Flüssigkeit oder dem Gel positioniert sind.

Ferner ist es bei einer Variante der vorliegenden Erfindung möglich, dass die Laserschutzwand aus wenigstens zwei Teilbereichen mit unterschiedlichen Materialien ausgebildet ist oder wenigstens ein Zwischenraum zwischen einer Innenwand und einer Außenwand der Laserschutzwand mit einer Mehrschichtanordnung aus unterschiedlichen festen und/oder flüssigen und/oder gelförmigen Materialien gefüllt ist. Diese Anordnung macht es möglich, ein Fortschreiten einer laserbedingten Erosion einer Laserschutzwand in Abhängigkeit von der jeweils detektierten Schallcharakteristik, die einem bestimmten Material der Mehrschichtanordnung zuzuordnen ist, zu erkennen.

In dem erfindungsgemäßen Laserschutzsystem können anstelle einfacher preiswerter Körperschallsensoren auch Laservibrometer zum Einsatz kommen. Ein Laservibrometer muss nicht direkt an der Laserschutzwand befestigt sein, sondern kann Schwingungen bzw. Schall berührungslos erfassen. Dies kann beispielsweise zum Erreichen schwer zugänglicher Konstruktionselemente sinnvoll sein, oder das Laservibrometer kann zur Grundeinrichtung und zur Eichung des Laserschutzsystems verwendet werden.

Die der Erfindung zugrunde liegende Aufgabe wird ferner durch ein Laserschutzverfahren gemäß Anspruch 8 gelöst.

Dieses Verfahren stellt eine kostengünstige Lösung zur aktiven Überwachung einer großflächigen und dreidimensional ausgebildeten Laserschutzwand dar. Eine beliebig gestaltete Laserschutzwand kann mit diesem Verfahren mit einem oder wenigen handelsüblichen Körperschallsensoren überwacht werden. Das Verfahren gestattet eine lückenlose und vollständige Überwachung der kompletten Laserschutzwand. Für erhöhte Schutzanforderungen ist dieses Verfahren modular erweiterbar.

In der Praxis werden von dem wenigstens einen Körperschallsensor, der in dem erfindungsgemäßen Laserschutzverfahren eingesetzt wird, verschiedene akustische Signale empfangen, die nicht von dem Laser erzeugt werden. In einer günstigen Ausführung des Laserschutzverfahrens werden daher in der Signalauswerteeinrichtung lasertypische Signale von anderen Signalen mittels wenigstens eines Filters getrennt. Nur die mittels Filter separierten Signale werden zur Auswertung herangezogen. Durch diese Filterung kann die Zuverlässigkeit des Laserschutzverfahrens verbessert werden, und fälschlich ausgelöste Laserabschaltungen können vermieden werden. Ein typisches Grundelement eines Filters ist ein Frequenzfilter für die Pulsfrequenz eines gepulsten Lasers, der Filter kann aber auch weitere Komponenten wie z. B. den Oberwellenanteil von Konstruktionselementen oder die typische Dämpfung in Konstruktionselementen enthalten.

In einer günstigen Ausführung des erfindungsgemäßen Laserschutzverfahrens, die den Anforderungen an die Sicherheit eines Laserschutzverfahrens gerecht wird, werden von einem akustischen Kontrollfrequenzerzeuger kontinuierlich Körperschallwellen in der Laserschutzwand erzeugt. Der Kontrollfrequenzerzeuger generiert Körperschall in der Laserschutzwand und zwar mit einer anderen Frequenz als der vom Laser erzeugten Körperschallfrequenz. Durch die andere Frequenz kann das Kontrollsignal von dem Lasersignal als eigentlich zu messendem Signal getrennt werden, wobei die Kontrollfunktion permanent aktiv ist. Über die Prüfung des Vorhandenseins der Kontrollfrequenz kann so die Funktionsfähigkeit des Laserschutzverfahrens kontinuierlich überwacht werden. Als Reaktion auf das Fehlen der Kontrollfrequenz, was auf einen Fehler des Systems hinweisen könnte, kann der Laser sofort deaktiviert werden.

In einer vorteilhaften Weiterbildung des erfindungsgemäßen Laserschutzverfahrens senden bei einer doppelwandigen Ausführung der Laserschutzwand, bei welcher der Zwischenraum zwischen Innenwand und Außenwand mit einer Flüssigkeit oder einem Gel befüllt ist, der Körperschallsensor und ein weiterer Körperschallsensor, der in der Flüssigkeit oder dem Gel angeordnet ist, Signale an die Signalauswerteeinrichtung. Bei einer solchen Vorrichtung wird durch den oder die verwendeten Körperschallsensor(en) beim Auftreffen des Laserstrahls auf der Flüssigkeit oder dem Gel, wie oben ausgeführt, eine sich vom Auftreffen auf der Innenwand der Laserschutzwand unterscheidende Frequenz detektiert und hierdurch festgestellt, ob der Laserstrahl die Innenwand durchdrungen und die Flüssigkeit oder das Gel getroffen hat. Optional überwacht ein Füllstandssensor zusätzlich den Füllstand der Flüssigkeit in der doppelwandigen Laserschutzwand. In einem Havariefall, in dem die Innenwand von dem Laser durchbohrt wurde, läuft die Flüssigkeit aus, der Füllstand in der Laserschutzwand sinkt und der Füllstandssensor meldet zusätzlich zu dem Körperschallsensor einen Fehler. Durch eine solche Vorgehensweise wird nicht nur ein erhöhter passiver sondern auch ein ergänzender aktiver Schutz erreicht, was bei besonders leistungsstarken Laseranlagen erforderlich sein kann.

Bei dieser Ausführungsvariante kann die Signalauswerteeinheit feststellen, ob der Laserstrahl auf die Innenwand einer doppelwandigen Laserschutzwand trifft oder ob die Innenwand bereits durchbohrt ist und der Laser bereits auf die Flüssigkeit oder das Gel hinter der Innenwand trifft. Durch ein solches Verfahren können in Abhängigkeit von dem Grad der Beschädigung der Laserschutzwand unterschiedliche Aktionen eingeleitet werden.

Wenn das System mit mehreren Sensoren ausgestattet ist, können aus dem Vergleich der durch die Körperschallsensoren zur Verfügung gestellten Signale weitere Informationen gewonnen werden. So ist z.B. eine grobe Positionsbestimmung des Ortes der Laserschädigung an der Laserschutzwand möglich.

In einem weiteren Ausführungsbeispiel des erfindungsgemäßen Laserschutzverfahrens ist die Laserschutzwand aus wenigstens zwei Teilbereichen mit unterschiedlichen Materialien ausgebildet, die Signalauswerteeinrichtung filtert die Signale des Körperschallsensors und ordnet die Signale einem Material der Laserschutzwand zu, auf welches der Laserstrahl auftrifft. Bei diesem Verfahren werden also nicht mehrere Sensoren dazu verwendet, die fortschreitende Erosion in einer Laserschutzwand zu überwachen, sondern diese wird von nur einem Körperschallsensor erfasst, und die Signalauswerteeinrichtung gewinnt durch den Einsatz verschiedener Filter die Information, welches Material der Laserschutzwand die Quelle des Körperschalls ist.

Bevorzugte Ausführungsbeispiele der vorliegenden Erfindung, deren Funktion und Vorteile werden im Folgenden anhand von Figuren näher erläutert, wobei
- Figur 1: schematisch einen möglichen Grundaufbau des erfindungsgemäßen Laserschutzsystems zeigt;
- Figur 2: schematisch eine weitere Ausführungsvariante des erfindungsgemäßen Laserschutzsystems mit einer aus mehreren Konstruktionselementen bestehenden Laserschutzwand zeigt; und
- Figur 3: schematisch einen Ausschnitt aus einer doppelwandigen Laserschutzwand einer weiteren Ausführungsform des erfindungsgemäßen Laserschutzsystems zeigt.

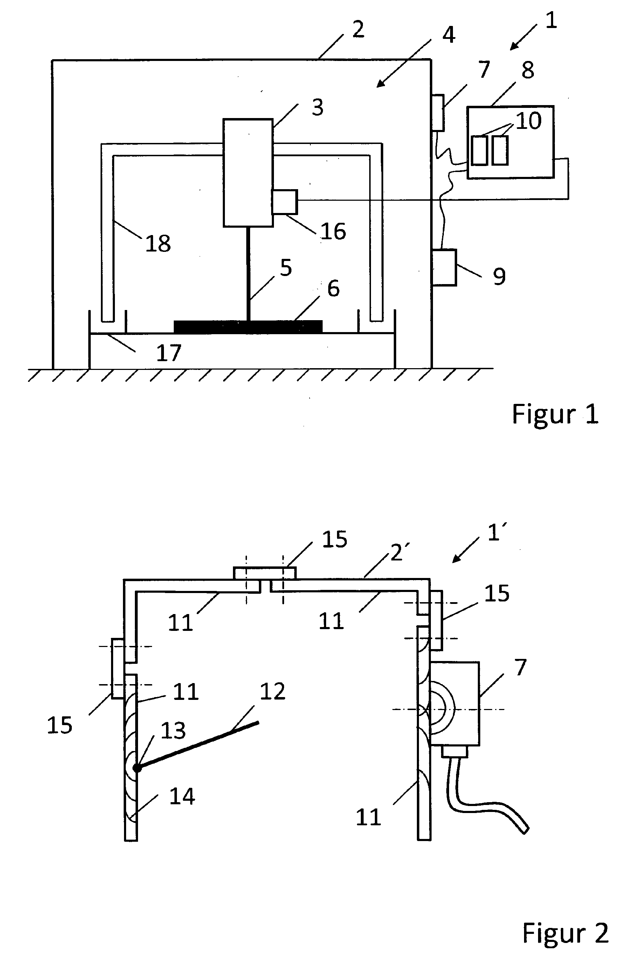

Fig. 1 veranschaulicht die prinzipielle Funktion eines erfindungsgemäßen Laserschutzsystems 1 anhand eines schematisch dargestellten Ausführungsbeispiels.

In der in Fig. 1 gezeigten Anordnung ist schematisch ein Laser 3 dargestellt, der mit einem Laserstrahl 5 ein Werkstück 6 bearbeitet. Das Werkstück 6 liegt in dem gezeigten Ausführungsbeispiel auf einer Werkbank 17 auf, und der Laser 3 ist an einem Chassis 18 befestigt. Der Arbeitsraum 4 des Lasers 3 wird durch das Laserschutzsystem 1 abgesichert. Das Laserschutzsystem 1 weist in dem gezeigten Beispiel horizontale und vertikale Laserschutzwände 2, wenigstens einen an oder in wenigstens einer der Laserschutzwände 2 vorgesehenen oder auf wenigstens eine der Laserschutzwände 2 ausgerichteten Körperschallsensor 7, wenigstens eine mit dem Köperschallsensor 7 gekoppelte Signalauswerteeinrichtung 8 und eine Schaltvorrichtung 16 für den Laser 3 auf. Die vorgesehene wenigstens eine Laserschutzwand 2 besteht aus einem Schall gut leitenden Material oder einem Materialmix, welcher relativ kurze Schalllaufzeiten durch die Laserschutzwand 2 zu dem Körperschallsensor 7 ermöglicht. Als Körperschallsensor(en) 7 können einfache Schwingungsaufnehmer oder auch berührungslos arbeitende Laservibrometer zum Einsatz kommen.

Erfindungsgemäß ist das Laserschutzsystem 1, insbesondere dessen Elemente zur Schalldetektion, von der eigentlichen Laserbearbeitungsvorrichtung schallmäßig entkoppelt. Das heißt, die Laserschutzkabine mit den Laserschutzwänden 2 ist von dem Bearbeitungstisch bzw. der Werkbank 17, auf welcher die Laserbearbeitung des Werkstückes 6 erfolgt, getrennt.

Das Laserschutzsystem 1 bewirkt, dass der Laserstrahl 5 in einem Havariefall unter keinen Umständen aus dem Arbeitsraum 4 ausdringen kann. Die Laserschutzwand 2 stellt einen mechanischen Schutzwall dar, der das Austreten des Laserstrahles 5 aus dem Arbeitsraum 4 für eine bestimmte Zeitdauer verhindert. Die Laserschutzwand 2 könnte jedoch bei längerer Bestrahlung von dem Laserstrahl 5 durchdrungen werden. Der Laser 3 erzeugt bei Auftreffen auf die Laserschutzwand 1 einen Körperschall in der Laserschutzwand 2. Dieser Körperschall wird von dem Körperschallsensor 7 erfasst und in ein Signal umgewandelt, welches von der Signalauswerteeinrichtung 8 erfasst, verarbeitet und ausgewertet wird.

Dabei ist das erfindungsgemäße Laserschutzsystem 1 so ausgebildet, dass nur oberhalb eines bestimmten Energieeintrags in wenigstens eine der Laserschutzwände 2, ab welchem ein zerstörerischer Effekt durch den Laser 3 auftritt, ein Abschalten des Lasers 3 initiiert wird. Wenn lediglich Streulicht des Lasers 3 mit einer geringen Intensität in der Laserkabine auf die Laserschutzwände 2 auftrifft, wird der Laser 3 nicht abgeschaltet. Aus diesem Grund weist die Signalauswerteinrichtung 8 vorzugsweise eine Intensitätsauswerteeinrichtung auf, mit welcher die Signalintensität des durch den Körperschallsensor 7 erfassten Schallsignals überwacht werden kann.

Die Feststellung des Auftretens von laserstrahlinduziertem Körperschall in einem Material mit einem für den Laser 3 typischen Frequenzbereich lässt auf einen Lasertreffer auf der Laserschutzwand 2 des Laserschutzsystems 1 schließen. Da der Frequenzbereich für jede Laserbearbeitungseinrichtung spezifisch ist und von den jeweiligen Leistungs- und Materialparametern abhängig ist, kann die Signalauswerteeinrichtung 8 so geeicht werden, dass bei Detektion von Körperschall in einem laserspezifischen Frequenzbereich dieser Körperschall sofort dem Laser 3 zugeordnet werden kann und daraufhin an die Schaltvorrichtung 16 für den Laser 3 ein Schaltsignal von der Signalauswerteeinrichtung 8 übermittelt wird, mit welchem der Laser 3 abgeschaltet werden kann.

Die Frequenz, die Intensität und die zeitliche Veränderung des detektierten Körperschallsignals lassen Rückschlüsse auf die fortschreitende Erodierung des Laserschutzsystems 1 bzw. der Konstruktionselemente des Laserschutzsystems 1 bis zur Abschaltung des Lasers 3 zu. Durch die Analyse der Signalintensität des Lasertreffers durch einen oder mehrere Körperschallsensoren 7 kann eine grobe Lokalisierung des Treffers im Gesamtlaserschutzsystem erfolgen. Durch Eichung lässt sich auch eine Aussage über den getroffenen Bereich bzw. das getroffene Bauteil treffen.

Vorzugsweise weist die Signalauswerteeinrichtung 8 einen oder mehrere Signalfilter 10 auf, durch welche die von dem wenigstens einen Körperschallsensor 7 erfassten Signale gefiltert werden können, sodass Störfrequenzen von den eigentlichen Messfrequenzen oder von Kontrollfrequenzen getrennt werden können.

Das Laserschutzsystem 1 ist nicht auf die Verwendung eines einzigen Körperschallsensors 7 beschränkt. Es könnten auch mehrere Körperschallsensoren 7, die in Fig. 1 nicht dargestellt sind, zur Überwachung der Laserschutzwand 2 oder zur Überwachung mehrerer Konstruktionselemente im Bereich der Laserschutzwand 2 oder auch im Bereich der Laserbearbeitungseinrichtung eingesetzt werden.

Zur Erhöhung der Systemsicherheit kann das Laserschutzsystem 1, wie in Fig. 1 gezeigt, wenigstens auch einen Kontrollfrequenzerzeuger 9 aufweisen, der ebenfalls an die Signalauswerteeinrichtung 8 gekoppelt ist. Das Signal des Kontrollfrequenzerzeugers 9 ist so ausgewählt, dass es sich nicht mit den Signalen, die durch den Laser 3 erzeugt werden, überschneidet. Dadurch kann das Signal des Kontrollfrequenzerzeugers 9 permanent auch während des Laserbetriebes erzeugt und von dem Körperschallsensor 7 und der Signalauswerteeinrichtung 8 über einen spezifischen Signalfilter 10 erfasst werden. Über dieses Kontrollsignal kann eine permanente Funktionsüberprüfung des Laserschutzsystems 1 erfolgen.

Fig. 2 zeigt ein erfindungsgemäßes Laserschutzsystem 1' mit einer Laserschutzwand 2', die aus mehreren Konstruktionselementen 11 besteht. In dieser Figur ist ein Havariefall dargestellt, in welchem ein fehlgeleiteter Laserstrahl 12 in einem Berührungspunkt 13 auf die Laserschutzwand 2' trifft. Eine solche Havarie kann verschiedene Ursachen, wie z.B. eine Reflektion an einem Werkstück, eine Fehlprogrammierung oder anderes, haben. In dem Berührungspunkt 13 werden infolge des fotoakustischen oder thermoakustischen Effekts oder aufgrund beginnender Materialzerstörung akustische Schwingungen mit einer lasertypischen Frequenz erzeugt. Diese Schwingungen werden in Form von Körperschall 14 zu einem oder zu mehreren Körperschallsensoren 7 geleitet. Dabei ist es nicht erforderlich, dass jedes Konstruktionselement 11 der Laserschutzwand 2' mit einem eigenen Körperschallsensor 7 ausgestattet ist. Es können auch mehrere Konstruktionselemente 11 durch schwingungsübertragende Verbindungselemente 15 aneinander gekoppelt sein und von einem gemeinsamen Körperschallsensor 7 überwacht werden. Es muss allerdings sichergestellt sein, dass die Verbindungselemente 15 starre Elemente sind, die den Schall übertragen. Konstruktionselemente, die elastisch beispielsweise über Gummidichtungen gekoppelt sind, müssen mit separaten Schwingungsaufnehmern bzw. Körperschallsensoren 7 überwacht werden.

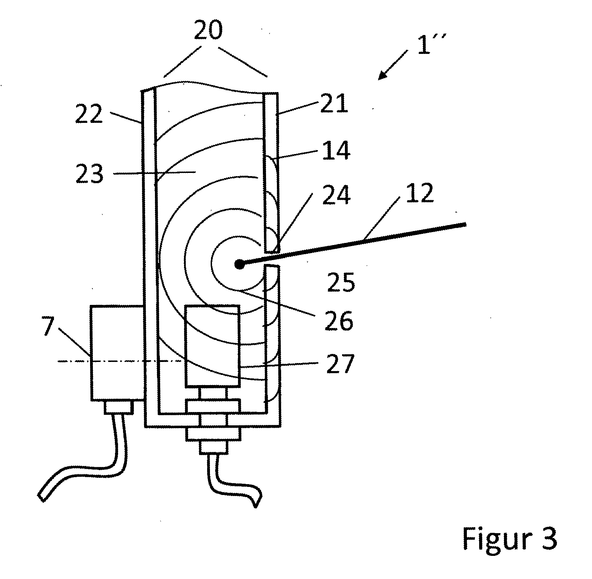

Fig. 3 zeigt ein Beispiel für eine aufwändigere Laserschutzwand 20 eines weiteren erfindungsgemäßen Laserschutzsystems 1". Fig. 3 zeigt einen Ausschnitt der doppelwandigen Laserschutzwand 20, welche eine einem Laser zugewandte Innenwand 21 und eine dem Laser abgewandte Außenwand 22 aufweist und in welcher ein Zwischenraum 23 zwischen der Innenwand 21 und der Außenwand 22 mit einem Medium befüllt ist. Das Medium kann im einfachsten Falle Wasser sein, es könnte aber auch eine andere Flüssigkeit oder ein Gel zum Einsatz kommen. Die doppelwandige, mit Wasser gefüllte Laserschutzwand 20 bietet einerseits einen erhöhten passiven Laserschutz, da das Wasser als Kühlflüssigkeit für die Innenwand 21 wirkt und Wasser selbst eine hohe Wärmekapazität hat. Zudem wird die Energie des auf die Flüssigkeit auftreffenden Laserstrahls 12 durch einen aus der Laserschutzwand 20 austretenden Flüssigkeitsstrahl abgeleitet.

Somit wird durch das flüssige Füllmedium in dem Zwischenraum 23, durch welches sich Schall besonders schnell verbreitet, welcher von einem Körperschallsensor 27 in der Flüssigkeit erfasst wird, ein besonders guter aktiver Laserschutz zur Verfügung gestellt.

Zudem kann durch einen in dem Zwischenraum 23 vorgesehenen Füllstandssensor, durch welchen bei einer Laserschädigung der Innenwand 21 ein Auslaufen von Flüssigkeit aus dem Zwischenraum 23 detektiert werden kann, ein weiterer aktiver Schutzmechanismus zum Einsatz kommen. Eine solche Laserschutzwand 20 mit erhöhter passiver Schutzwirkung ist für besonders exponierte Partien des Laserschutzsystems 1" prädestiniert. Die doppelwandige Laserschutzwand 20 weist entweder einen eigenen Körperschalldetektor 7 auf oder ist mittels starrer, körperschallübertragender Verbindungselemente 15, ähnlich wie in Fig. 2, in ein gemeinsames Schwingungssystem eingebunden.

Darüber hinaus ist es gemäß einer weiteren, hier nicht gezeigten Ausführungsvariante der vorliegenden Erfindung möglich, dass zwischen der Innenwand 21 und der Außenwand 22 der Laserschutzwand 20 ein Festkörper aus einem anderen Material als dem der Innenwand 21 und/oder der Außenwand 22 oder eine definierte Schichtfolge bzw. ein Mehrschichtaufbau aus unterschiedlichen festen und/oder flüssigen Materialien vorgesehen ist. In Abhängigkeit davon, auf welches dieser Materialien der Laserstrahl 12 trifft, wird eine entsprechende Schallcharakteristik durch den wenigstens einen Körperschallsensor 7, 27 erfasst und an die Signalauswerteinrichtung 8 übermittelt, welche aus den entsprechenden Daten eine Durchdringungstiefe der Laserschutzwand 20 bzw. deren fortschreitende Erosion durch den Laserstrahl 12 ermitteln kann.

In Fig. 3 ist ein Fall dargestellt, in dem der Laserstrahl 12 die Innenwand 21 durchdrungen hat. Der Laser kommt nun an einem Kontaktpunkt 25 mit dem flüssigen oder festen Füllmedium in dem Zwischenraum 23 in Berührung. Dadurch werden Schallwellen 26 mit einer anderen Charakteristik als beim Durchdringen der Innenwand 21 erzeugt, die sich um den Kontaktpunkt 25 ausbreiten. Für eine Wechselwirkung des Laserstrahles 12 mit dem Füllmedium ist dieses so auszuwählen, dass es nicht für die Laserlichtwellenlänge transparent ist. Die Schallwellen 26 können entweder mit einem in dem Füllmedium angeordneten Körperschallsensor 27 oder mit dem hier an der Außenwand 22 vorgesehenen Körperschallsensor 7 detektiert werden.

Wenn, anders als hier dargestellt, nur der Körperschallsensor 7 verwendet wird, kann durch die Auswertung der veränderten Frequenzcharakteristik der Laserkontakt mit dem Füllmedium in dem Zwischenraum 23 von dem Laserkontakt mit der Innenwand 21 unterschieden werden. Durch die Auswertung verschieden positionierter Körperschallsensoren 7, 27 oder durch die Schalländerung an einem Körperschallsensor 7 bei fortschreitender Erodierung der Laserschutzwand 20 kann die Signalauswerteeinrichtung 8 den Fortschritt der Schädigung analysieren und in Abhängigkeit von der Gefährdung verschiedene Schutzmaßnahmen einleiten.

Das erfindungsgemäße Laserschutzsystem 1, 1', 1" ist nicht auf die oben beschriebenen Ausführungsformen beschränkt und kann insbesondere durch weitere aktive und/oder passive Laserschutzmechanismen, wie gestickte oder genähte Dehnungsmessstrukturen in der Laserschutzwand 2, 20, die Verwendung von dessiniertem Aluminium als Material für die Laserschutzwand 2, 20 usw., ergänzt werden.

## Patentansprüche

1. Laserschutzsystem (1, 1', 1") mit wenigstens einer Vorrichtung zur Detektion wenigstens eines Laserstrahles (5) eines Lasers (3) auf einer Laserschutzwand (2, 20),
wobei
die Vorrichtung wenigstens einen Körperschallsensor (7) aufweist, der an oder in der Laserschutzwand (2, 20) vorgesehen ist oder auf die Laserschutzwand (2, 20) ausgerichtet ist, wobei der Körperschallsensor (7) mit einer Signalauswerteeinrichtung (8) verbunden ist, die mit einer Schaltvorrichtung (16) für den Laser (3) gekoppelt ist, **dadurch gekennzeichnet, dass** das Laserschutzsystem (1) einen akustischen Kontrollfrequenzerzeuger (9) aufweist, der an der Laserschutzwand (2, 20) vorgesehen ist.

2. Laserschutzsystem nach Anspruch 1, **dadurch gekennzeichnet, dass** die Signalauswerteeinrichtung (8) wenigstens einen Signalfilter (10) aufweist.

3. Laserschutzsystem nach den Ansprüchen 1 bis 2, **dadurch gekennzeichnet, dass** Konstruktionselemente (11) der Laserschutzwand (2) durch starre, schwingungsübertragende Verbindungselemente (15) verbunden sind und von wenigstens einem gemeinsamen Körperschallsensor (7) überwacht werden.

4. Laserschutzsystem nach einem der vorhergehenden Ansprüche, **dadurch gekennzeichnet, dass** die Laserschutzwand (20) eine Innenwand (21) und eine Außenwand (22) aufweist, und wenigstens ein Zwischenraum (23) zwischen der Innenwand (21) und der Außenwand (22) mit einer Flüssigkeit oder einem Gel befüllt ist.

5. Laserschutzsystem nach Anspruch 4, **dadurch gekennzeichnet, dass** der Körperschallsensor (7) oder wenigstens ein weiterer Körperschallsensor (27), der auch mit der Signalauswerteeinrichtung (8) verbunden ist, in der Flüssigkeit oder dem Gel angeordnet ist.

6. Laserschutzsystem nach einem der vorhergehenden Ansprüche, **dadurch gekennzeichnet, dass** die Laserschutzwand (2) aus wenigstens zwei Teilbereichen mit unterschiedlichen Materialien ausgebildet ist oder wenigstens ein Zwischenraum (23) zwischen einer Innenwand (21) und einer Außenwand (22) der Laserschutzwand (20) mit einer Mehrschichtanordnung aus unterschiedlichen Materialien gefüllt ist.

7. Laserschutzsystem nach einem der vorhergehenden Ansprüche, **dadurch gekennzeichnet, dass** der Körperschallsensor (7) ein Laservibrometer ist.

8. Laserschutzverfahren, wobei mit wenigstens einer Vorrichtung ein Auftreffen wenigstens eines Laserstrahles (5) eines Lasers (3) auf eine Laserschutzwand (2, 20) detektiert wird, mit wenigstens einem Körperschallsensor (7), der an oder in der Laserschutzwand (2, 20) vorgesehen ist oder auf die Laserschutzwand (2, 20) ausgerichtet ist, Schall detektiert wird, das Signal des Körperschallsensors (7) an eine Signalauswerteeinrichtung (8) übermittelt wird, und von der Signalauswerteeinrichtung (8) bei einer durch ein Auftreffen des Laserstrahles (5) auf der Laserschutzwand (2, 20) ausgelösten Signaländerung des Körperschallsensors (7) ein Schaltsignal an den Laser (3) abgegeben wird, **dadurch gekennzeichnet, dass** von einem akustischen Kontrollfrequenzerzeuger (9) kontinuierlich Körperschallwellen in der Laserschutzwand (2, 20) erzeugt werden.

9. Laserschutzverfahren nach Anspruch 8, **dadurch gekennzeichnet, dass** die Signalauswerteeinrichtung (8) mittels wenigstens eines Signalfilters (10) lasertypische Signale von anderen Signalen trennt.

10. Laserschutzverfahren nach einem der Ansprüche 8 bis 9, **dadurch gekennzeichnet, dass** bei der Laserschutzwand (20) eine Innenwand (21) und eine Außenwand (22) vorgesehen sind, wobei wenigstens ein Zwischenraum (23) zwischen der Innenwand (21) und Außenwand (22) mit einer Flüssigkeit oder einem Gel befüllt ist, und der Körperschallsensor (7) und wenigstens ein weiterer Körperschallsensor (27), der in der Flüssigkeit oder dem Gel angeordnet ist, Signale an die Signalauswerteeinrichtung (8) senden.

11. Laserschutzverfahren nach einem der Ansprüche 9 bis 12, **dadurch gekennzeichnet, dass** die Laserschutzwand (2) und/oder ein Zwischenraum (23) zwischen einer Innenwand (21) und einer Außenwand (22) der Laserschutzwand (20) aus wenigstens zwei Teilbereichen mit unterschiedlichen Materialien ausgebildet ist, die Signalauswerteeinrichtung (8) die Signale des Körperschallsensors (7) filtert und die Signale einem Material der Laserschutzwand (2, 20), auf welches der Laserstrahl (5) auftrifft, zuordnet.

## Claims

1. Laser protection system (1, 1', 1") having at least one device for detecting at least one laser beam (5) of a laser (3) on a laser protection wall (2, 20), wherein the device comprises at least one solid-borne sound sensor (7), which is provided in the laser protection wall (2, 20) or directed on the laser protection wall (2, 20), wherein the solid-borne sound sensor (7) is connected to a signal evaluation unit (8) which is coupled to a contactor (16) for the laser (3), **characterised in that** the laser protection system (1) comprises an acoustic control frequency generator (9) which is provided on the laser protection wall (2, 20).

2. Laser protection system of claim 1, **characterised in that** the signal evaluation unit (8) includes at least one signal filter (10).

3. Laser protection system of claim 1 or 2, **characterised in that** construction elements (11) of the laser protection wall (2) are connected by rigid, oscillation transferring connection elements (15) and are monitored by at least one common solid-borne sound sensor (7).

4. Laser protection system of one of the preceding claims, **characterised in that** the laser protection wall (20) has an internal wall (21) and an external wall (22) and at least one intermediate space (23) between the internal wall (21) and the external wall (22) is filled with a fluid or a gel.

5. Laser protection system of claim 4, **characterised in that** the solid-borne sound sensor (7) or at least one additional solid-borne sound sensor (27), which is also connected to the signal evaluation unit (8), is arranged in the fluid or the gel.

6. Laser protection system according to any of the preceding claims, **characterised in that** the laser protection wall (2) consists of at least two partial areas with different materials or at least one intermediate space (23) between an internal wall (21) and an external wall (22) of the laser protection wall (20) is filled with a multilayer configuration of different materials.

7. Laser protection system of one of the preceding claims, **characterised in that** that the solid-borne sound sensor (7) is a laser vibrometer.

8. Laser protection method, wherein at least one device enables to detect the incidence at least one laser beam (5) of a laser (3) on a laser protection wall (2, 20), at least one solid-borne sound sensor (7), which is provided on or in the laser protection wall (2, 20) or is directed to the laser protection wall (2, 20), enables to detect sound, wherein the signal of the solid-borne sound sensor (7) is transferred to a signal evaluation unit (8) and wherein a switching signal is sent to the laser (3) from the signal evaluation unit (8) in case of a signal change of the solid-borne sound sensor (7) triggered by an impact of the laser beam (5) on the laser protection wall (2, 20), **characterised in that** solid-borne sound waves are generated in the laser protection wall (2, 20) by an acoustic control frequency generator (9) continuously.

9. Laser protection system of claim 8, **characterised in that** the signal evaluation unit (8) separates laser typical signals from other signals by means of at least one signal filter (10).

10. Laser protection method of one of the claims 8 to 9, **characterised in that** an internal wall (21) and an external wall (22) are provided by the laser protection wall (20), whereas at least one intermediate space (23) between the internal wall (21) and the external wall (22) is filled with a fluid or a gel, that the solid-borne sound sensor (7) or at least one additional solid-borne sound sensor (27), which is arranged in the fluid or the gel, send signals to the signal evaluation unit (8).

11. Laser protection method of one of the claims 9 to 12, **characterised in that** the laser protection wall (2) and/or an intermediate space (23) between an internal wall (21) and an external wall (22) of the laser protection wall (20) consist of at least two partial areas with different materials, the signal evaluation unit (8) filters the signals of the solid-borne sound sensor (7) and allocates the material to a material of the laser protection wall (2, 20), on which the laser beam (5) impacts.

## Revendications

1. Système de protection laser (1, 1', 1") pourvu d'au moins un dispositif de détection d'au moins un rayon laser (5) d'un laser (3) sur une paroi de protection laser (2, 20), dans lequel le dispositif présente au moins un transducteur sonique (7), prévu sur ou dans la paroi de protection laser (2, 20) ou dirigé vers la paroi de protection laser (2, 20), où le transducteur sonique (7) est connecté à un dispositif d'évaluation des signaux (8), couplé au contacteur (16) pour le laser (3), **caractérisé en ce que** le système de protection laser (1) présente un générateur de fréquence de commande acoustique (9), prévu sur la paroi de protection laser (2, 20).

2. Système de protection laser selon la revendication 1, **caractérisé en ce que** le dispositif d'évaluation des signaux (8) comprend au moins un filtre de signaux (10).

3. Système de protection laser selon les revendications 1 et 2, **caractérisé en ce que** les éléments de construction (11) de la paroi de protection laser sont connectés par des éléments de liaison (15) rigides et transmetteurs d'oscillations et qu'ils sont surveillés par au moins un transducteur sonique commun (7).

4. Système de protection laser selon l'une quelconque des revendications précédentes, **caractérisé en ce que** la paroi de protection laser (20) comporte une paroi intérieure (21) et une paroi extérieure (22) et qu'au moins un espace intermédiaire (23) entre la paroi intérieure (21) et la paroi extérieure (22) est rempli d'un liquide ou d'un gel.

5. Système de protection laser selon la revendication 4, **caractérisé en ce que** le transducteur sonique (7) ou au moins un autre transducteur sonique (27), également relié au dispositif d'évaluation des signaux (8), est disposé dans le liquide ou le gel.

6. Système de protection laser selon l'une quelconque des revendications précédentes, **caractérisé en ce que** la paroi de protection laser (2) se compose d'au moins deux parties de matériaux différents ou qu'au moins un espace intermédiaire (23) entre une paroi intérieure (21) et une paroi extérieure (22) de la paroi de protection laser (20) de configuration multicouche est rempli de matériaux différents.

7. Système de protection laser selon l'une quelconque des revendications précédentes, **caractérisé en ce que** le transducteur sonique (7) est un vibromètre laser.

8. Procédé de protection laser, dans lequel au moins un dispositif permet de détecter l'indicence d'au moins un rayon laser (5) d'un laser (3) sur une paroi de protection laser (2, 20), dans lequel au moins un transducteur sonique (7) prévu sur ou dans la paroi de protection laser (2, 20) ou dirigé vers la paroi de protection laser (2, 20) permet de détecter le son, dans lequel le signal du transducteur sonique (7) est transféré vers un dispositif d'évaluation des signaux (8) et dans lequel un signal de commutation est envoyé au laser (3) par la dispositif d'évaluation des signaux (8) en cas de changement de signal décleché de transducteur sonique (7) par l'impact du rayon laser (5) sur la paroi de protection laser (2, 20), **caractérisé en ce que** des ondes soniques sont générées dans la paroi de protection laser (2, 20) de façon continue par un générateur de fréquence de commande acoustique (9).

9. Procédé de protection laser selon la revendication 8, **caractérisé en ce que** le dispositif d'évaluation des signaux (8) sépare les signaux typiques laser des autres signaux à l'aide au moins d'un filtre de signaux (10).

10. Procédé de protection laser selon l'une quelconque des revendications 8 à 9, **caractérisé en ce qu'**une paroi intérieure (21) et une paroi extérieure (22) sont prévues au niveau de la paroi de protection laser (20), où au moins un espace intermédiaire (23) entre la paroi intérieure (21) et la paroi extérieure (22) est rempli d'un liquide ou d'un gel, et que le transducteur sonique (7) et au moins un autre transducteur sonique (27), disposé dans le liquide ou le gel, envoient des signaux au dispositif d'évaluation des signaux (8).

11. Procédé de protection laser selon l'une quelconque des revendications 9 à 12, **caractérisé en ce que** la paroi de protection laser (2) et/ou un espace intermédiaire (23) entre une paroi intérieure (21) et une paroi extérieure (22) de la paroi de protection laser (20) se composent d'au moins deux parties de matériaux différents, que le dispositif d'évaluation des signaux (8) filtre les signaux du transducteur sonique (7) et affecte les signaux à un matériau de la paroi de protection laser (2, 20), impacté par le rayon laser (5).
